# EUROPEAN PATENT SPECIFICATION

(11) **EP 0 751 211 B1**
(45) Date of publication and mention of the grant of the patent: **05.09.2001**
(21) Application number: 96110481.7
(22) Date of filing: 28.06.1996
(51) Int. Cl.: C11D 3/04, C11D 3/39, A23C 7/02

(54) **Dairy system cleaning method**
Molkerei-Reinigungssystemverfahren
Procédé de nettoyage pour laiterie

(30) Priority: 28.06.1995 GB 9513110
(43) Date of publication of application: 02.01.1997
(73) Proprietor: LHS (UK) LIMITED, Cheshire SK8 6RB (GB)
(72) Inventor: Vaneker, Joop, 7596 KH Rossum (NL)
(74) Representative: ffrench-Lynch, Cecil

(56) References cited:
- EP-A- 0 191 372
- WO-A-93/23517
- WO-A-94/18301
- DE-A- 4 301 277
- KIRK-OTHMER: 'Encyclopedia of Chemical Technology', 1981, WILEY-INTERSCIENCE PUBLICATION, NEW YORK - CHICHESTER - BRISBANE - TORONTO 3rd Edition, Volume 15 * page 526 *

## Description

The present invention relates to cleaning/disinfecting methods and, in particular, to a cleaning/ disinfecting method for treatment of dairy equipment comprising milking equipment and a milk storage tank or tanks.

Typically, the regular cleaning schedule to which a milking system is subjected involves cleaning and disinfecting the equipment after each milking round. Milk storage tanks are cleaned after a predetermined number of milking rounds.

Such a system is normally rinsed with an alkaline product based on sodium/potassium hydroxide, sodium hypochlorite solution and phosphates or phosphate substitutes, the product being especially formulated for dairy hygiene. These alkaline products may also contain silicates (for use in corrosion protection of aluminium) and surfactants.

In addition, the system is regularly rinsed with an acid formulation based on phosphoric acid or other acids. The acid formulation may also contain a surfactant to aid cleaning and disinfection. Typically, the milking equipment will be rinsed with the acid formulation on a weekly basis and the milk storage tank will be rinsed with acid every two weeks. In hard water areas, the equipment may be rinsed more frequently with the acidic solution.

One of the drawbacks of the cleaning regimen outlined above is that dairy produce, such as butter, may become subject to low levels of contamination with tri- and tetrachloromethane. These contaminants are thought to arise as a result of reaction between active chlorine from residual sodium hypochlorite solution on the surface of the milking system and organic molecules in the milk. It has been demonstrated that the level of contamination in butter is related to the concentration of active chlorine in the rinse solution. Clearly, such contamination is undesirable to the consumer.

Another drawback arises in respect of disposal of the rinsing solutions. A significant proportion of farmers pass the waste rinsings into drains that are connected to the official waste water treatment system.

In future, this activity may be curbed by regulations which restrict the pH of permitted effluents to within the range pH 6-9.5. It will then become necessary to combine batches of alkaline and acid washings in a ratio of approximately 4 alkaline batches to 1 acid batch in order to satisfy the restrictions on effluent pH. The use of active chlorine compounds results in the contamination of the waste water with organo-chlorine compounds (AOX) such as chloroform. The general level of AOX is typically 100-500 ppb. In future, the regulations will permit a maximum AOX concentration of 50 ppb.

Many other farmers mix their washings with dung and spread the mixture over the land.

Neither of the above forms of disposal is entirely satisfactory from an environmental point of view.

WO 93/23517 (Laporte) relates to a cleaning system comprising phosphoric acid and sulfamic acid together with a peroxygen species generator. The composition is a one-component system. The document does not, apparently, describe an alkaline environment.

EP-A-0191372 (Henkel) relates to a two-component alkali cleaner. The first component comprises an alkaline material, whilst the second component comprises a silicic acid together with various other materials such as surfactant, builder, stabilizer. It is not apparent that the peroxygen species is disclosed.

It is therefore an object of the present invention to find an alternative for active chlorine in cleaning/ disinfecting formulations for dairy hygiene. It is a further object of the invention to develop a cleaning/disinfecting system which satisfies anticipated regulations concerning effluent pH. It is yet another object of the invention to develop a cleaning/disinfecting method which uses only fully biodegradable raw materials.

According to the present invention, there is provided a method for cleaning and disinfecting milking equipment or a milk storage tank or tanks comprising washing the equipment, tank or tanks with an alkaline composition and with an acid composition, the method being characterised in that neither the alkaline nor the acid composition contains active chlorine, at least one of the alkaline and acid compositions contains an active peroxygen species and the use of the alkaline and of the acid compositions are alternated between in successive washing operations.

The compositions used in the method of the invention may be provided in solid powder or, more preferably, liquid form.

According to a particular aspect of the invention the compositions used in the method of the invention comprise an alkaline composition containing the following constituents in the stated proportions by weight:

| | |
|---|---|
| Alkali-stable sequestrant | 0.2 - 10.0 % |
| Dispersant | 0.5 - 6.0 % |
| Alkali metal hydroxide | 15.0 - 45.0 % |
| Water, balance to | 100.0% |

and an acid composition containing the following constituents in the stated proportions by weight:

| | |
|---|---|
| Phosphoric acid | 30.0 - 50.0% |
| Acid-stable sequestrant | 2.0 - 15.0% |
| Stabiliser | 0.1 - 2.0% |
| Peroxygen species | 2.0 - 20.0% |
| Water, balance to | 100.0% |

Unlike prior art cleaning preparations, the system defined above does not contain a chlorine disinfectant in the alkaline component. Nevertheless, the overall system is disinfectant in its action. Also, the molar proportions of alkali and acid in the respective components are selected such that they substantially neutralise each other when used in equal quantities.

Preferably, the effluents from successive washings are combined to form a substantially neutral mixture prior to discharge into the waste water system.

Preferably, the peroxygen species is generated in situ from the reaction between a peroxide such as aqueous hydrogen peroxide solution and an organic carboxylic acid, preferably a C1-C6 carboxylic acid such as acetic acid.

The peroxygen species is believed to be dual purpose in its action. Firstly, it cleans/disinfects through its action as an oxidising agent. However, it also contributes to the cleaning process through physical means by generating microscopic bubbles of oxygen which exert a "scrubbing" effect on the surfaces to which they come into contact.

A particularly preferred embodiment of the invention comprises the use of a two-component system in which the alkaline component contains the following constituents in the stated proportions by weight:

| | |
|---|---|
| Bayhibit®-AM (50% sol. phosphonate) | 1.5 % |
| Norasol® LMW (43% sol. polyacrylate) | 4.1 % |
| Sodium hydroxide (33% solution) | 84.0 % |
| Water, balance to | 100.0% |

and the acid component contains the following constituents in the stated proportions by weight:

| | |
|---|---|
| Phosphoric acid (81% solution) | 49.4 % |
| Dequest 2010 (50% sol. phosphonate) | 0.5 % |
| Dipicolinic acid | 0.2 % |
| Glacial acetic acid (99.6% sol.) | 6.0 % |
| Peroxide (35% sol.) | 8.6 % |
| Water, balance to | 100.0% |

The combination of the phosphonate sequestrant and polyacrylate dispersant could be replaced by a single molecule containing both phosphonate and polyacrylate moieties, or even by a suitable phosphate. The phosphoric acid can be replaced by an acid compatible with the peroxygen compound.

## Claims

1. A method for cleaning and disinfecting milking equipmen or a milk storage tank or tanks comprising washing the equipment tank or tanks with an alkaline composition and with an acid composition the method being **characterised in that** neither the alkaline nor the acid composition contains active chlorine, at least one of the alkaline and acid compositions contains an acti peroxyqen species and the use of the alkaline and of the acid compositions are alternated between in successive washing operations.

2. A method as claimed in claim 1 wherein the alkaline composition contains the following constituents in the stated proportions by weight:
| | |
|---|---|
| Alkali-stable sequestrant | 0.2 - 10.0% |
| Dispersant | 0.5 - 6.0% |
| Alkali metal hydroxide | 15.0 - 45.0% |
| Water, balance to | 100.0% |
and the acid composition contains the following constituents in the stated proportions by weight:
| | |
|---|---|
| Phosphoric acid | 30.0 - 50.0% |
| Acid-stable sequestrant | 2.0 - 15.0% |
| Stabiliser | 0.1 - 2.0% |
| Peroxygen species | 2.0 - 20.0% |
| Water, balance to | 100.0% |

3. A method as claimed in any preceding claim wherein the molar proportions of alkali and acid in the respective compositions are selected such that they neutralise each other when used in equal quantities.

4. A method as claimed in claim 3 wherein the effluent from successive washings is combined to form a substantially neutral mixture prior to discharge into the waste water system.

## Patentansprüche

1. Verfahren zur Reinigung und Desinfektion von Melkausrüstung oder einem Milchlagertank oder -tanks umfassend: Waschen der Ausrüstung, des Tanks oder der Tanks mit einer Alkalizusammensetzung und mit einer Säurezusammensetzung, wobei das Verfahren **dadurch gekennzeichnet** ist, daß weder die Alkalinoch die Säurezusammensetzung aktives Chlor enthält, mindestens die Alkali- oder die Säurezusammensetzung eine aktive Peroxidspezies enthält und die Verwendung der Alkali- und der Säurezusammensetzung zwischen sukzessiven Waschschritten alterniert wird.

2. Verfahren nach Anspruch 1, wobei die Alkalizusammensetzung die folgenden Bestandteile in den angegebenen Gewichtsverhältnissen enthält:
| | |
|---|---|
| alkali-stabiles Maskierungsmittel | 0,2 - 10% |
| Dispergiermittel | 0,5 - 6,0% |
| Alkalimetallhydroxid | 15,0 - 45,0% |
| Wasser, Rest zu | 100%, |
und die Säurezusammensetzung die folgenden Bestandteile in den angegebenen Gewichtsverhältnissen enthält:
| | |
|---|---|
| Phosphorsäure | 30,0 - 50,0% |
| säurestabiles Maskierungsmittel | 2,0 - 15,0% |
| Stabilisator | 0,1 - 2,0% |
| Peroxidspezies | 2,0 - 20,0% |
| Wasser, Rest zu | 100%. |

3. Verfahren nach einem der vorstehenden Ansprüche, wobei die molaren Verhältnisse von Alkali und Säure in den entsprechenden Zusammensetzungen so ausgewählt werden, daß sie einander neutralisieren, wenn sie in gleichen Mengen verwendet werden.

4. Verfahren nach Anspruch 3, wobei der Abstrom von sukzessiven Wäschen kombiniert wird, um vor Ablassen in das Abwassersystem ein im wesentlichen neutrales Gemisch zu erzeugen.

## Revendications

1. Procédé pour le nettoyage et la désinfection d'équipement de traite ou d'une ou de plusieurs cuves de stockage de lait comprenant l'étape consistant à laver l'équipement, la cuve ou les cuves avec une composition basique et avec une composition acide, le procédé étant **caractérisé en ce que** ni la composition basique ni la composition acide ne contiennent de chlore actif, en ce qu'au moins l'une des compositions basique et acide contient une espèce de peroxygène actif et en ce que l'utilisation de la composition basique et l'utilisation de la composition acide sont alternées entre les opérations successives de lavage.

2. Procédé selon la revendication 1, dans lequel la composition basique contient les constituants suivants dans les proportions en poids énoncées :
| | |
|---|---|
| Agent séquestrant stable aux bases 10,0 % | 0,2 à |
| Dispersant 6,0 % | 0,5 à |
| Hydroxyde de métal alcalin 45,0 % | 15,0 à |
| Eau, complément jusqu'à | 100,0 % |
| et la composition acide contient les constituants suivants dans les proportions en poids énoncées : | |
| Acide phosphorique 50,0 % | 30,0 à |
| Agent séquestrant stable aux acides 15,0 % | 2,0 à |
| Stabilisant 2,0 % | 0,1 à |
| Espèce peroxygénée 20,0 % | 2,0 à |
| Eau, complément jusqu'à | 100,0 % |

3. Procédé selon l'une quelconque des revendications précédentes, dans lequel les proportions molaires de base et d'acide dans les compositions respectives sont choisies de façon telle qu'elles se neutralisent mutuellement quand elles sont utilisées en quantités égales.

4. Procédé selon la revendication 3, dans lequel l'effluent provenant des lavages successifs est combiné pour former un mélange essentiellement neutre avant de le décharger dans le système des eaux usées.
